(19) **Europäisches Patentamt**

**European Patent Office**

**Office européen des brevets**

(11) **EP 1 569 185 A2**

(12) **EUROPEAN PATENT APPLICATION**

(43) Date of publication:
**31.08.2005 Bulletin 2005/35**

(51) Int Cl.⁷: **G09B 5/06**, G09B 15/00

(21) Application number: **05101278.9**

(22) Date of filing: **21.02.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **25.02.2004 JP 2004050318**

(71) Applicant: **YAMAHA CORPORATION**
**Shizuoka 430-8650 (JP)**

(72) Inventor: **Miyaki, Tsuyoshi**
**430-8650, Hamamatsu-shi (JP)**

(74) Representative: **Kehl, Günther et al**
**Kehl & Ettmayr Patentanwälte,**
**Friedrich-Herschel-Strasse 9**
**81679 München (DE)**

(54) **Fingering guidance apparatus and program**

(57)    A fingering guidance image 81 for guiding a fingering upon performing a chord of a stringed instrument to a user is displayed on a display device. This fingering guidance image 81 includes a musical instrument image 811 indicating a guitar, a depressed pointer 813 arranged at the position in the musical instrument image 811 that is depressed upon performing a chord and a fingering image 812 indicating fingers in the form of performing a chord, among which the fingering image 812 is made to be a transmitting image. Accordingly, even if the fingering image 812 is superposed on the musical instrument image 811 and the depressed pointer 813, a user can clearly confirm the musical instrument image 811 and the depressed pointer 813 through the fingering image 812.

FIG.1

100:Fingering guidance apparatus

EP 1 569 185 A2

## Description

BACKGROUND OF THE INVENTION

Field of the Invention

The present invention relates to a technique for presenting to a user a fingering upon performing a musical instrument.

Description of the Related Art

There has been proposed various techniques for presenting to a user a fingering upon performing a musical instrument. Japanese Unexamined Patent Application No. HEI10-39739 (Fig. 7), for example, discloses a technique for sequentially displaying a fingering upon performing a musical instrument in synchronism with the reproduction of a music piece. This technique allows the user to play a musical instrument, confirming the displayed fingering.

However, this technique entails a problem that the relationship between each performance operation element operated upon the performance (e.g., a key of keyboard instrument or a string in stringed instrument) and each finger cannot necessarily be easily confirmed. Specifically, in case where the image of the fingers are displayed as superposed on the image indicating the performance operation element of the musical instrument, for example, the image of the performance operation element is hidden behind the image of the fingers, resulting in that the user cannot visually confirm the performance operation element. In case where a fingering upon playing a chord of a stringed instrument is displayed, in particular, the image of each finger that depresses a string is inevitably displayed over the image of the string that is the performance operation element, so that it is difficult to accurately confirm the depressed position of each string.

SUMMARY OF THE INVENTION

The present invention is accomplished in view of the above-mentioned circumstances, and aims to provide a fingering guidance apparatus by which a user can easily confirm a fingering upon performing a musical instrument and a program that causes a computer to function as a fingering display device.

In order to solve the above-mentioned subjects, a fingering guidance apparatus according to the present invention has image forming means for forming a fingering guidance image including a musical instrument image indicating a musical instrument and a transmitting image indicating fingers in the form of performing the musical instrument and display control means for causing the fingering guidance image formed by the image forming means to be displayed on a display device. In the present invention, an image indicating fingers in the form of performing the musical instrument (hereinafter referred to as "fingering image") is made to be a transmitting image. Accordingly, even if the fingering guidance image is formed so as to be superposed over the musical instrument image, the user can precisely confirm the musical instrument image via the fingering guidance image. It should be noted that the "transmitting image" in this application is a visible image whose display manner is selected in order that the user can recognize the image displayed behind. For example, a translucent image wherein an alpha value representing tranceparency is determined to a numerical value corresponding to translucent, or an image indicating only the outline of an object such as fingers performing the musical instrument (i.e., the background image is visibly displayed in the outline), corresponds to the "transmitting image" in the present invention. Further, the other embodiment of the present invention has designating means for designating a manner of fingers upon performing a musical instrument or designating means for designating a performance operation element that should be operated by a user, wherein the image forming means forms the fingering guidance image based upon the designated content by the designating means.

In a desirable embodiment of the present invention, the image forming means forms a fingering guidance image further including a pointer arranged at the performance operation element, that should be operated, in the musical instrument image. According to this embodiment, the user can more accurately confirm the performance operation element that should be operated by the user by visually recognizing the performance operation element and the pointer. Moreover, the fingering image is made to be the transmitting image even in this embodiment, so that, even if the fingering guidance image is formed so as to be superposed over the pointer, the user can accurately confirm the position of the pointer (or the position of the performance operation element to which the pointer is arranged) through the fingering image. It should be noted that the "performance operation element" in this application is an operation element that is operated by the user upon the performance, examples of which include a key of a keyboard instrument and a string in a stringed instrument.

In case where the fingering upon performing a chord of a stringed instrument is displayed, the image of each finger performing a depression of a string is inevitably displayed over the image of the string that is the performance operation element as described above, resulting in that it is particularly difficult for the user to confirm the string that should be operated. In order to solve this problem, a fingering guidance apparatus according to the present invention has chord designating means for designating any one of plural chords of a stringed instrument, image forming means for forming a fingering guidance image including a musical instrument image indicating a stringed instrument, a depressed pointer arranged at the position to be depressed upon performing the chord designated by the chord designating means and a transmitting image indicating fingers in the form of performing the chord designated by the chord designating means and display control means for causing the fingering guidance image formed by the image forming means to be displayed on a display device.

In this invention, an image indicating fingers in the form of performing the musical instrument is made to be a transmitting image. Accordingly, even if the fingering guidance image is formed so as to be superposed over the musical instrument image and the depressed string pointer, the user can precisely confirm the musical instrument image and the depressed string pointer through the fingering guidance image.

Further, this invention can adopt a configuration wherein obtaining means for obtaining chord sequence data indicating a sequence order of a chord in a music piece is provided, wherein the chord designating means sequentially designates a chord in the order indicated by the chord sequence data obtained by the obtaining means. According to this embodiment, the chord whose fingering is to be guided is sequentially changed in the fingering guidance image in the order of performing the music piece, whereby the user can efficiently practice the chord performance of the music piece.

The embodiment wherein the order of the chord is designated by the chord sequence data may be provided with capo position designating means for designating the position of the stringed instrument where a capotasto should be attached, wherein the chord designating means may have transposition control means that designates a chord obtained by transposing the chord indicated by the chord sequence data according to the position of the capotasto designated by the capo position designating means. According to this embodiment, the chord is transposed according to the position of the capotasto, whereby the fingering guidance image dealing with various performances is provided to the user. Further, in another embodiment, the chord designating means designates one chord in the music piece and the other chord next to the one chord in the sequence indicated by the chord sequence data, while the image forming means forms a fingering guidance image corresponding to the one chord and a fingering guidance image corresponding to the other chord and the display control means causes each fingering guidance image formed by the image forming means to be displayed on the display device. This embodiment allows the user to confirm the chord that should be performed next in addition to the chord that should currently be performed. Moreover, tone generating means for outputting a tone signal based upon the music piece data may be provided, wherein the chord designating means may have timing control means that sequentially designates a chord in synchronism with the output of the tone signal by the tone generating means. According to this embodiment, the chord to be guided in the fingering guidance image is renewed in synchronism with the reproduction of the music piece, thus convenient for the user practicing the chord performance of the music piece.

In another embodiment of the present invention, the image forming means has means for changing the transmitting image indicating the fingers into a non-transmitting image. According to this embodiment, the fingering image indicating the fingers is displayed not only as the transmitting image but also as the non-transmitting image, resulting in that the user can clearly confirm the form of the fingers. Moreover, the fingering can be confirmed from various viewpoints by the configuration provided with viewpoint designating means for designating a viewpoint in the fingering guidance image, wherein the image forming means forms the fingering guidance image that the stringed instrument and fingers are seen from the viewpoint designated by the viewpoint designating means.

In still another embodiment, the image forming means forms the fingering guidance image including subinformation relating to the chord designated by the chord designating means. This embodiment allows the user to confirm not only the fingering of the stringed instrument but also the subinformation relating to the chord, whereby the user can more efficiently learn the chord performance. It should be noted that the adoptable subinformation includes various information such as a chord name, an open string pointer indicating an open string upon performing a chord, a mute string pointer indicating a mute string upon performing a chord or a fret number depressed upon performing a chord.

A desirable embodiment of the present invention is provided with position designating means for designating either one of high-position and low-position as a position upon performing a chord, wherein the image forming means forms the transmitting image indicating the fingers in the form of performing the chord designated by the chord designating means at the position designated by the position designating means. This embodiment provides the fingering guidance image dealing with various performance manners to the user.

The present invention can be specified as a program for causing a computer to function as the fingering guidance apparatus according to the present invention. Specifically, this program causes the computer to function as image forming means for forming a fingering guidance image including a musical instrument image indicating a musical instrument and a transmitting image indicating fingers in the form of performing the musical instrument and display control means for causing the fingering guidance image formed by the image forming means to be displayed on a display device. Paying particular attention to the configuration for guiding the fingering of the stringed instrument, this program causes the computer to function as chord designating means for designating any one of plural chords of a stringed instrument, image forming means for forming a fingering guidance image including a musical instrument image indicating a stringed instrument, a depressed pointer arranged at the position to be depressed upon performing the chord designated by the chord designating means and a transmitting image indicating fingers in the form of performing the chord designated by the chord designating means and display control means for causing the fingering guidance image formed by the image forming means to be displayed on a display device.

According to the present invention, the user can easily confirm the fingering upon performing a music instrument.

BRIEF DESCRIPTION OF THE DRAWINGS

Fig. 1 is a block diagram showing a configuration of a fingering guidance apparatus according to the first embodiment of the present invention.

Fig. 2 is a view showing a content of a fingering display window when a non-transmitting mode is selected.

Fig. 3 is a view showing a content of a fingering display window when a transmitting display mode is selected.

Fig. 4 is a view showing a content of a fingering display window when a performer viewpoint mode is selected.

Fig. 5 is a view showing a content of chord sequence data.

Fig. 6 is a view showing a content of guitar structure data.

Fig. 7 is a view showing a specific example of finger structure data.

Fig. 8 is a view showing a specific example of a structure referring table.

Fig. 9 is a view showing a specific example of animation data.

Fig. 10 is a view showing a specific example of an animation referring table.

Fig. 11 is a block diagram for explaining a function of forming a fingering guidance image.

Fig. 12 is a flowchart for explaining an operation of this embodiment.

Fig. 13 is a view showing a content of a fingering display window in a second embodiment of the present invention.

Fig. 14 is a view showing a display example in a third embodiment of the present invention.

Fig. 15 is a view showing a content of a fingering display window according to a modified example.

DESCRIPTION OF THE PREFERRED EMBODIMENT

[A: First Embodiment]

[A-1: Configuration of First Embodiment]

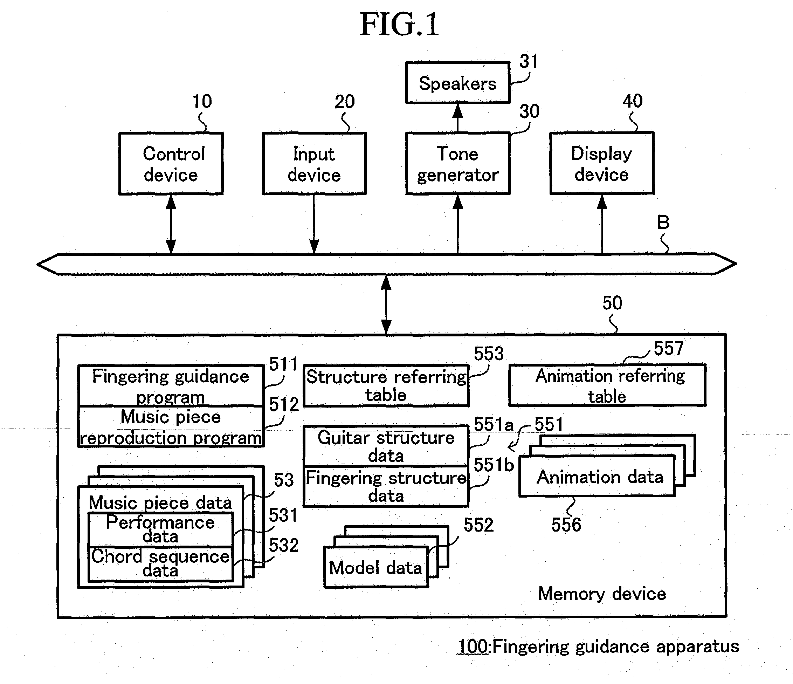

Firstly, a configuration of a fingering guidance apparatus 100 according to the first embodiment of the present invention will be explained with reference to Fig. 1. A control device 10 shown in this figure is for centrally controlling each section of the fingering guidance apparatus 100 and has a CPU (Central Processing Unit) that realizes various functions by the execution of a program, a ROM (Read Only Memory) that stores the program executed by the CPU and a RAM (Random Access Memory) used as a working area by the CPU. An input device 20, tone generator 30, display device 40 and memory device 50 are connected to the control device 10 via a bus B. Further, connected to the tone generator 30 are speakers 31. As described above, the fingering guidance apparatus 100 according to this embodiment has a hardware configuration same as that of a general-purpose computer represented by a personal computer.

The input device 20 has a pointing device such as a mouse and a keyboard provided with plural operation elements. It outputs a signal according to the operation by a user. The tone generator 30 generates tone signals based upon performance data instructing sound reproduction of a music piece. The speakers 31 sound out tones based upon the tone signal generated by the tone generator 30. The display device 40 has a CRT (Cathode Ray Tube) or liquid crystal display panel for displaying various images under the control of the control device 10.

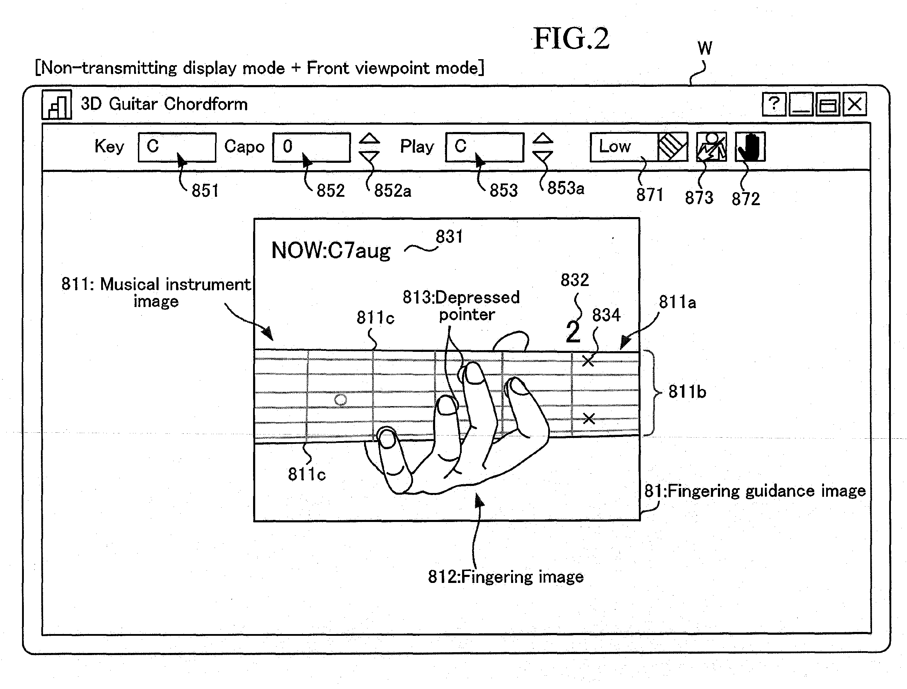

Displayed on this display device 40 is a fingering display window W shown in Fig. 2. As shown in Fig. 2, the fingering display window W includes a fingering guidance image 81. This fingering guidance image 81 is for presenting to the user the fingering for playing a chord of a guitar, and includes an image (hereinafter referred to as "musical instrument image) 811 indicating a guitar and an image (hereinafter referred to as "fingering image") 812 indicating fingers for playing this (almost from a wrist to fingertips). Fig. 2 shows the case where a neck section 811 a having a fingerboard 811 b with plural frets 811 c arranged is displayed as the musical instrument image 811. On the other hand, the fingering image 812 is an image indicating fingers in a form for playing the chord of the guitar. The form of the fingers indicated by the fingering image 812 is changed as occasion demands according to a chord that is a subject to be guided to the user (hereinafter referred to as to-be-guided chord). In this embodiment, the chord that should be played at each section of the music piece is sequentially designated as the to-be-guided chord in synchronism with the sound reproduction of the music piece. Accordingly, the content of the fingering image 812 (i.e., the form of the fingers upon playing the to-be-guided chord) is sequentially renewed with the sound reproduction of the music piece.

There are a high-position and low-position as a position (form of fingers) upon playing one chord. In this embodiment, which position for the form of fingers is displayed, i.e., the fingering for a high-position or the fingering for a low-position, is selected by the user with respect to the to-be-guided chord. More specifically, every time a command button (hereinafter referred to as "position changing button") 871 arranged on the fingering display window W is operated by the input device 20, the change-over from one to another of the high-position and low-position is performed. A flag Fp indicating which is selected of the high-position and low-position (hereinafter referred to as "position flag") is set in the RAM of the control device 10.

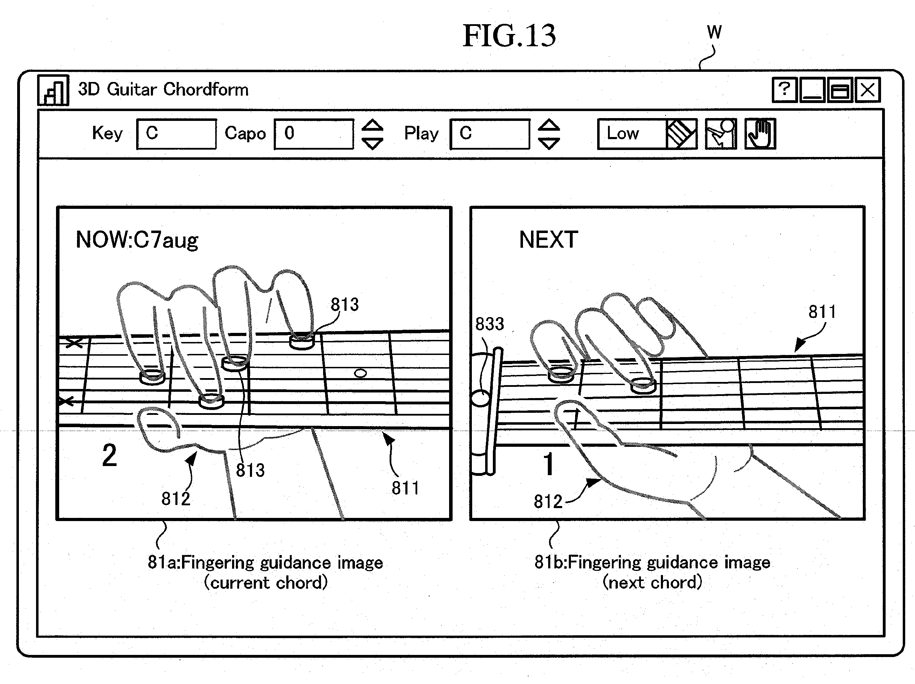

Moreover, the fingering guidance image 81 includes various subinformation about the to-be-guided chord. In this embodiment, the fingering guidance image 81 includes, as subinformation, chord name 831, fret number 832, open string pointer 833 (see fingering guidance image 81 b in Fig. 13), mute string pointer 834 and depressed string pointer 813. Among these, the chord name 831 is a symbol such as "C7aug" or "D#7" representing the name of the to-be-guided chord and the fret number 832 is a number allocated to each fret 811c. In this embodiment, displayed as the fret number 832 is the fret nearest to the leading end of the neck section (hereinafter referred to as "guided fret") among the frets depressed upon the performance of the to-be-guided chord. In case where the chord "C7aug" shown in Fig. 2 is played, for example, the second fret at the third string becomes the guided fret, so that "2" is included in the fingering guidance image 81 as the fret number 832. The fret number 832 is arranged in the vicinity of the guided fret in the musical instrument image 811 (i.e., at the position by which the user can discriminate which fret 811 c the fret number 832 indicates). On the other hand, the open string pointer 833 is a mark indicating the string (open string) that should be opened when the to-be-guided chord is played. It is arranged at the position corresponding to the edge section of the open string in the musical instrument image 811. It should be noted that the open string pointer 833 is not displayed since the chord shown in Fig. 2 does not include the open string (see Fig. 13). The mute string pointer 834 is a mark indicating the string that should be deadened (mute string) when the to-be-guided chord is played, and is arranged at the position corresponding to the edge section of the mute string in the musical instrument image 811. The depressed string pointer 813 is a mark indicating the position that should be depressed when the to-be-guided chord is played, and is arranged at the position that should be depressed in the fingerboard 811b of the musical instrument image 811. The user can easily confirm the form of the hand and fingers upon playing the to-be-guided chord by a visual confirmation of the subinformation. It should be noted that each section (musical instrument image 811, fingering image 812 and subinformation) included in the fingering guidance image 81 is generically described as "object".

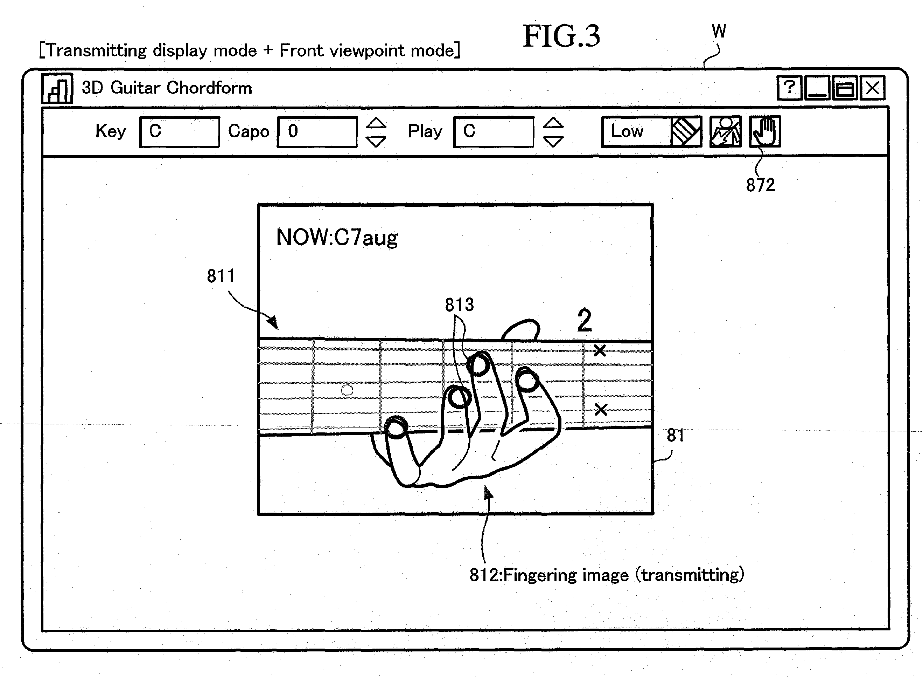

There may be a case where the fingering image 812 is displayed so as to be superposed on the musical instrument image 811 depending upon the to-be-guided chord as shown in Fig. 2. In this case, the depressed string pointer 813 or each fret 811c of the musical instrument image 811 is hidden behind the fingering image 812, with the result that the user cannot accurately confirm which position of the guitar he/she should depress. In view of this, the user can select a transmitting display mode wherein the fingering image 812 is displayed as a transmitting image as shown in Fig. 3, in addition to a non-transmitting display mode wherein the fingering image 812 is displayed as a non-transmitting image as shown in Fig. 2. The transmitting image means here an image whose display manner is determined in order that the user can visually confirm the image hidden behind. Fig. 3, for example, illustrates the case where the fingering image 812 is a semi-transparent image. In case where the transmitting display mode is selected, the user can confirm the musical instrument image 811 and the depressed string pointer 813 via the fingering image 812, even if the fingering image 812 is superposed on the musical instrument image 811 or the subinformation (especially, the depressed string pointer 813). On the other hand, the non-transmitting image is an image Whose display manner is determined in order that the user cannot visually confirm the image hidden behind. In case where the non-transmitting display mode is selected, the user can visually confirm only the section of the musical instrument image 811 or subinformation that is not overlapped with the fingering image 812. In this embodiment, every time a command button (hereinafter referred to as "transmitting/non-transmitting button") 872 arranged on the fingering display window W is operated by the input device 20, the changeover from one to another of the transmitting display mode and the non-transmitting display mode is performed. Set at the RAM of the control device 10 is a flag (hereinafter referred to as "transmitting display flag") Ft indicating which one is selected of the transmitting display mode and the non-transmitting display mode.

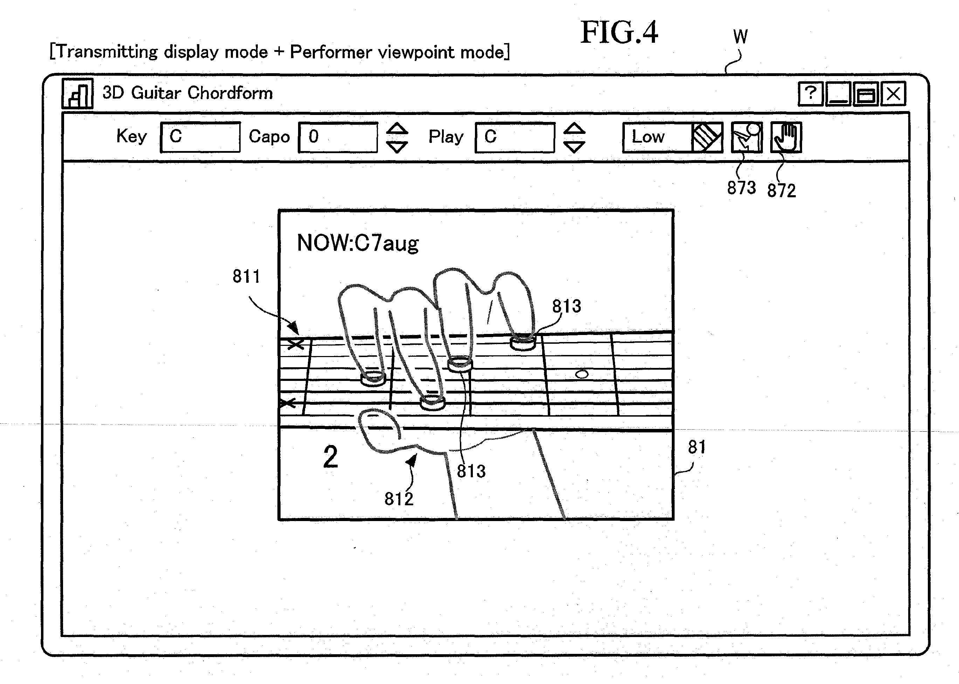

The viewpoint to each object of the fingering guidance image 81 is suitably changed according to the operation the user gives to the input device 20. More specifically, in this embodiment, the user can optionally select either one of a front viewpoint mode wherein the viewpoint directs toward the front of the fingerboard 811b in the musical instrument image 811 as shown in Fig. 2 and a performer viewpoint mode wherein the viewpoint directs toward the neck section 811a of the guitar from the performer as shown in Fig. 4 (illustrating the case where the transmitting display mode is selected). In the performer viewpoint mode, the image that the fingerboard 811b of the neck section 811a is seen from the diagonal upper section is displayed as the fingering guidance image 81. In this embodiment, every time a command button (hereinafter referred to as "viewpoint changing button") 873 arranged on the fingering display window W is operated by the input device 20, the changeover from one to another of the front viewpoint mode and the performer viewpoint mode is performed. Set at the RAM of the control device 10 is a flag (hereinafter referred to as "viewpoint flag") Fv indicating which one is selected of the front viewpoint mode and the performer viewpoint mode. Further, in addition to the alternate changeover of two types of viewpoints in the front viewpoint mode and the performer viewpoint mode, the viewpoint, angle and enlargement ratio to each object can continuously be changed by suitably operating the input device 20. For example, dragging a mouse of the input device 20 by a left-click with a mouse pointer positioned on the fingering guidance image 81 changes the viewpoint to each object according to the drag distance and drag direction, while dragging by a right-click changes the angle of each object according to the drag distance and drag direction.

As shown in Fig. 2, the fingering display window W includes a key display section 851 showing a key of the reproduced music piece, a capo position display section 852 showing the fret number to which a capotasto is set and a play key display section 853 showing a play key. The user can optionally select a fret to which a capotasto is set by suitably operating the up/down button 852a arranged at the capo position display section 852.

The chord root of the to-be-guided chord is changed according to the position of the capotasto designated here. For example, the key of the music piece is "C" and the position of the capotasto is "0" (that means the capotasto is not set) in Fig. 2, so that the play key is "C" same as the key of the music piece. When the position of the capotasto is "1" (that means the capotasto is set at the first fret) by the operation of the user to the up/down button 852a with this state, the play key is changed to "B" and the to-be-guided chord is changed from "C7aug" to "B7aug" that has the chord root flatted by a half tone. It is possible to change only the play key if the up/down button 853a at the play display section 853 is suitably operated with the state where "0" is designated as the capo position.

The memory device 50 shown in Fig. 1 is means for storing a program executed by the control device 10 and various data utilized upon the execution of this program. Examples of usable memory device 50 include a hard disk device having a magnetic disk incorporated therein or a device that drives a portable recording medium represented by a CD-ROM. Stored in this memory device 50 are a program (hereinafter referred to as "fingering guidance program") 511 that causes the fingering guidance image 81 to be displayed onto the display device 40 as illustrated in Figs. 2 to 4 and a program (hereinafter referred to as "music piece reproduction program") 512 that reproduces a music piece by controlling the tone generator 30, besides an OS for managing the general operation of the fingering guidance apparatus 100.

Further, music piece data 53 indicative of the content of the music piece is stored in the memory device 50 every music piece. Each music piece data 53 has data structure in conformity to MIDI (Musical Instrument Digital Interface) standard, including performance data 531 indicative of a performed note of the music piece and chord sequence data 532 indicative of the sequence of each chord. The performance data 531 is data array in which a great number of sets composed of time stamp data and event data are sequentially arranged. The event data is for instructing tone generation start (a note on-event) and tone generation stop (note off-event) to the tone generator 30. The time stamp data is for indicating the timing when the event data is outputted to the tone generator 30. The time stamp data in this embodiment designates an output timing of each event data by a clock number counted from the start of the reproduction of the music piece. The control device 10 sequentially outputs to the tone generator 30 the event data included in the performance data 531 at the timing designated by the time stamp data by executing the music piece reproduction program 512. More specifically, the control device 10 counts a clock (hereinafter referred to as "MIDI clock") supplied from a clock generator not shown from a point when the reproduction of the music piece is started, and outputs the event data to the tone generator 30 at the timing when this counted value reaches the clock number of each time stamp data The performance tones of the music piece are outputted from the speakers 31 by repeatedly executing this process (i.e., the music piece is reproduced).

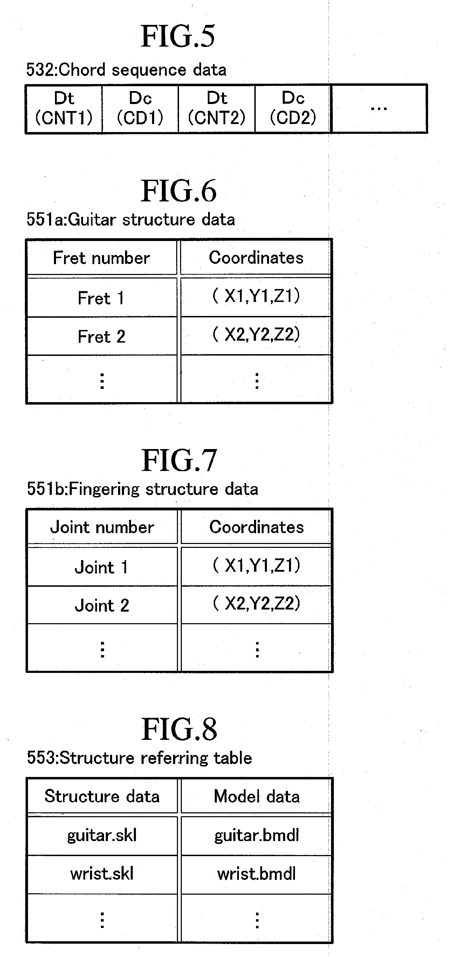

On the other hand, the chord sequence data 532 is data array wherein a great number of sets composed of the time stamp data Dt and the chord data Dc are sequentially arranged as shown in Fig. 5. The chord data Dc is data indicative of a chord that should be performed with the reproduction of the music piece. On the other hand, the time stamp data Dt is data for designating the timing when the chord designated by each chord data Dc should be started to be performed. Like the time stamp data Dt of the performance data 531, it designates the timing by a clock number counted from the point when the reproduction of the music piece is started. In the example of Fig. 5, a chord CD1 is designated at the timing when the count number of the MIDI clock reaches CNT1 from the start of the reproduction of the music piece, and a chord CD2 is designated at the timing when the count number reaches CNT2. The thus designated chord is defined as the to-be-guided chord in the fingering guidance image 81. The above-mentioned configuration sequentially changes the to-be-guided chord of the fingering guidance image 81 in synchronism with the reproduction of the music piece. It should be noted that data indicative of a time interval of each event data and each chord data Dc may be applied as the time stamp data of the performance data 531 and the chord sequence data 532.

As shown in Fig. 1, various data used for generating the aforesaid fingering guidance image 81 is stored in the memory device 50. Structure data 551 (551a, 551b), model data 552 and structure referring table 553 shown in Fig. 1 are for specifying the structure of the guitar displayed as the musical instrument image 811 or structure of fingers displayed as the fingering image 812 in the fingering guidance image 81. On the other hand, animation data 556 and animation referring table 557 shown in the same figure are for processing the fingers whose structure is specified as described above into a form according to the to-be-guided chord (i.e., transforming the fingers into a form upon performing the to-be-guided chord). The specific content of these pieces of data is described as follows.

Firstly, the structure data 551 is roughly divided into guitar structure data 551 a and finger structure data 551b. The guitar structure data 551a is for specifying a framework of a guitar in a virtual three-dimensional space. The guitar structure data 551a in this embodiment includes data that designates the position of each fret 811c arranged at the neck section 811a of the guitar (i.e., the position where each section obtained by dividing the neck section 811a by a fret 811c is joined to each other) as coordinates in the three-dimensional space. Accordingly, a straight line connecting these coordinates corresponds to the framework of the neck section 811a and the distance between the adjacent coordinates corresponds to the distance between each fret 811c. Further, the guitar structure data 551a includes data that designates the position at the edge section of each string as coordinates in the three-dimensional space. The above-mentioned pieces of data specify the structure of the guitar composed of the neck section 811a having plural frets 811c arranged and six strings bridged over the fingerboard 811b. On the other hand, the finger structure data 551b is for specifying the framework of fingers in the virtual three-dimensional space. The finger structure data 551b in this embodiment designates the position of each joint of fingers as coordinates in the three-dimensional space as shown in Fig. 7. Accordingly, a straight line connecting these coordinates corresponds to the framework of the fingers and the distance between the adjacent coordinates corresponds to the distance between each joint. It should be noted that a section between each joint whose position is designated by the finger structure data 551b is described as "bone" hereinafter. Specifically, fingers are grasped as the one obtained by joining plural bones to each other.

Next, the model data 552 is for representing a manner of the surface of the guitar and fingers (more specifically, a shape, color and design of each region composing the surface). For example, model data 552 indicative of the manner of each surface of the neck section 811a, fret 811c and strings is stored in the memory device 50 with respect to the guitar. Further, model data 552 indicative of the manner of the surface of a section corresponding to a pawl of each finger or of the surface (i.e., skin) of the section other than that is stored in the memory device 50 with respect to the fingers. The three-dimensional image of the guitar and fingers in the three-dimensional space is specified based upon the framework of the guitar and fingers specified by each structure data 551 and the manner of the surface of each section indicated by the model data 552. The structure referring table 553 is for associating each structure data 551 and each model data 552 with each other in order to specify the three-dimensional image. Specifically, a file name of each structure data 551 of the guitar or fingers and a file name of the model data 552 indicating the manner of the surface of this section are associated with each other in this structure referring table 553 as shown in Fig. 8. For example, Fig. 8 shows the case where the three-dimensional image of the guitar is specified by the guitar structure data 551a having a file name of "guitar.skl" and the model data 552 having a file name of "guitar.bmdl".

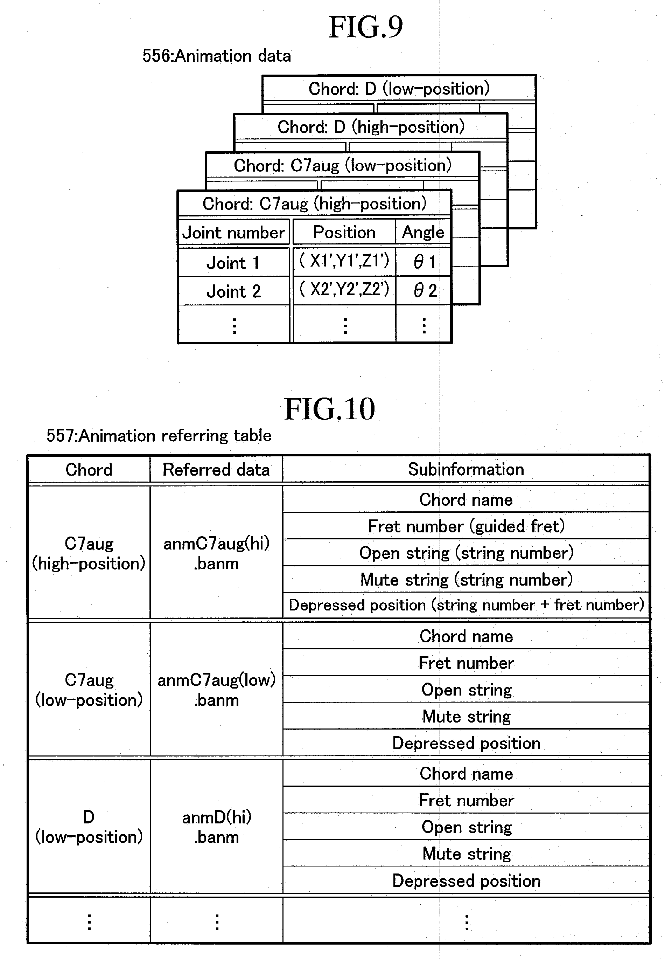

The animation data 556 is for defining the form of fingers upon performing a chord every chord. Specifically, the animation data 556 corresponding to one chord designates, every joint of fingers indicated by the finger structure data 551b, the position (coordinates) of the joint and the angle made by a pair of bones joined via the joint as shown in Fig. 9. This embodiment prepares animation data 556 defining the high-position fingering and animation data 556 defining the low-position fingering every combination (every chord) of each chord root such as "C" or "C#" and a chord type such as "M", "7" and "aug". Therefore, if there are 12 kinds of chord root and 34 kinds of chord type, for example, animation data 556 of 816 kinds (= 12 (number of kind of root chord) x 34 (number of kind of chord type) x 2 (number of kind of position) is prepared. Transforming the three-dimensional image of the fingers specified by the finger structure data 551b based upon the animation data 556 generates the three-dimensional image of fingers in the form of performing each chord at the position designated by the user.

On the other hand, the animation referring table 557 includes plural records each corresponding to the high-position and low-position of each chord as shown in Fig. 10. The record of each chord includes data (hereinafter referred to as "referred data") for specifying a section where the animation data 556 corresponding to this chord is stored and the subinformation relating to this chord. The referred data indicates, for example, a file name or pass name of the animation data 556. Further, a chord name, fret number, a symbol for discriminating an open string, a symbol for discriminating a mute string and a depressed position of a string are included in the animation referring table 557 as the subinformation in this embodiment. The symbol for discriminating the open string or mute string is the number allocated to each string. Moreover, the depressed position is specified as a set of the number of each depressed string and the depressed fret number in the string. It should be noted that the configuration can be applied wherein the subinformation is individually prepared every chord separate from the animation referring table 557.

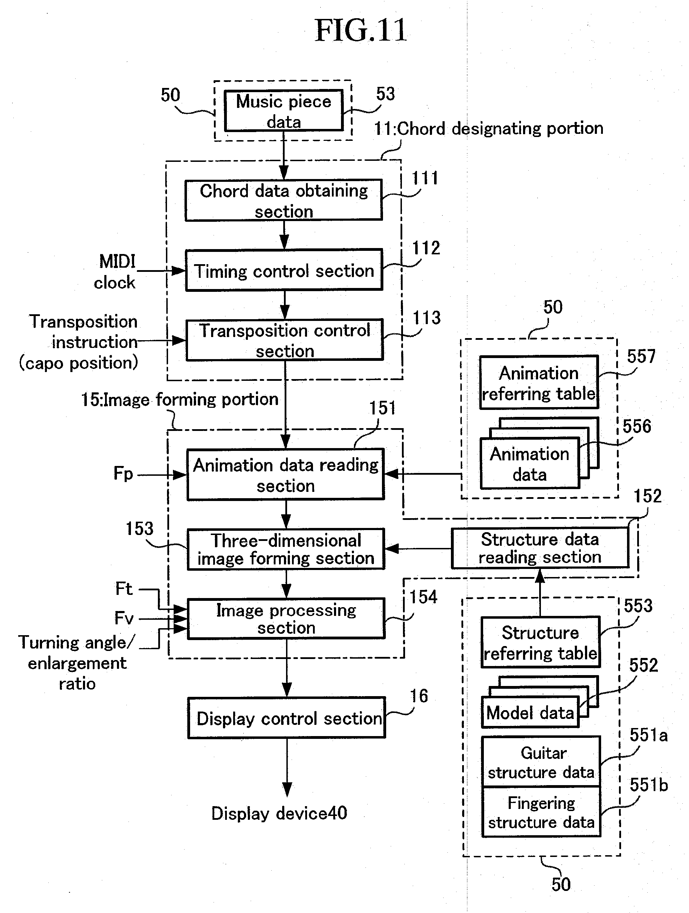

Fig. 11 is a block diagram showing a functional configuration for generating the fingering guidance image 81 from each data explained above. Each section shown in this figure is realized by the execution of the fingering guidance program 511 by the CPU of the control device 10. It should be noted that the explanation proceeds with attention particularly directed to the content of the process for generating the fingering guidance image 81, so that the process for displaying other information (e.g., each command button or the like) included in the fingering display window W is suitably omitted from the explanation.

A chord designating portion 11 shown in Fig. 11 designates the to-be-guided chord and has a chord data obtaining section 111, a timing control section 112 and a transposition control section 113. Among these, the chord data obtaining section 111 sequentially extracts the set of the time stamp data Dt and the chord data Dc included in the chord sequence data 532 in the music piece data 53 stored in the memory device 50. On the other hand, the timing control section 112 sequentially obtains the time stamp data Dt and the chord data Dc extracted by the chord data obtaining section 111 and sequentially outputs the chord data Dc at the timing designated by this time stamp data Dt. More specifically, the timing control section 112 starts to count the MIDI clock at the time when the reproduction of the music piece is started, and outputs the chord data Dc at the timing when the counted result agrees with the clock number designated by the time stamp data Dt. As described above, the event data of the performance data 531 used for the reproduction of the music piece is outputted to the tone generator 30 at the timing according to the MIDI clock like the chord sequence data 532. Therefore, the output operation of the chord data Dc by the timing control section 112 and the output operation of the event data to the tone generator 30 are synchronized. Accordingly, the timing control section 112 is grasped also as means for outputting the chord data Dc in synchronism with the reproduction of the music piece.

The transposition control section 113 transposes the chord indicated by the chord data Dc supplied from the timing control section 112 based upon the capo position designated by the capo position display section 852 and the play key designated by the play key display section 853, and outputs the chord data Dc indicative of the chord after the transposition. When the chord data Dc of the chord "Dm" is inputted with "1" designated as the capo position, for example, the transposition control section 113 outputs the chord data Dc indicating "C#m" whose chord type is common at the chord root (C#) that is flatted by a half tone than "Dm". The chord outputted from the transposition control section 113 is defined as the to-be-guided chord.

On the other hand, an image forming portion 15 forms the fingering guidance image 81 of the to-be-guided chord designated by the chord designating portion 11. It has an animation data reading section 151, a structure data reading section 152, a three-dimensional image forming section 153 and an image processing section 154. The animation data reading section 151 reads the animation data 556 and subinformation corresponding to the to-be-guided chord designated by the chord designating portion 11 from the memory device 50. Specifically, the animation data reading section 151 firstly specifies the to-be-guided chord and its position based upon the chord data Dc outputted from the transposition control section 113 and the content of the position flag Fp set according to the operation by the user, and searches and reads the record corresponding to the to-be-guided chord at this position from the animation referring table 557. This record includes the referred data and subinformation corresponding to the to-be-guided chord. Subsequently, the animation data reading section 151 specifies the location of the animation data indicated by the referred data and reads the animation data 556 stored at the specified location. Then, the animation reading section 151 outputs the animation data 556 and the subinformation read from the memory device 50 to the three-dimensional image forming section 153 as data relating to the to-be-guided chord. On the other hand, the structure reading section 152 reads the guitar structure data 551a and the finger structure data 551b from the memory device 50 as well as reads from the memory device 50 the model data 552 associated with the guitar structure data 551a and the finger structure data 551b in the structure referring table 553. Each structure data 551 and model data 552 read as described above are outputted to the three-dimensional image forming section 153.

The three-dimensional image forming section 153 forms a three-dimensional image wherein each object that should be included in the fingering guidance image 81 is arranged in the three-dimensional space. Specifically, the three-dimensional image forming section 153 firstly forms the three-dimensional image of the guitar based upon the guitar structure data 551a and the model data 552 read by the structure data reading section 152. Secondly, the three-dimensional image forming section 153 forms the three-dimensional image of the fingers based upon the finger structure data 551b and the model data 552 read by the structure data reading section 152 as well as processes the three-dimensional image of the fingers into a form upon performing the to-be-guided chord based upon the animation data 556 read by the animation data reading section 151. Examples of the process executed for transforming the three-dimensional image of the fingers based upon the animation data 556 include a process for moving the position of each joint of the fingers to the position indicated by the animation data 556 and a process for changing the angle made by the joined bones via each joint to the angle indicated by the animation data 556. Thirdly, the three-dimensional image forming section 153 adds the subinformation to the three-dimensional image of the guitar and fingers. More specifically, the three-dimensional image forming section 153 positions the depressed string pointer 813 at the position in the three-dimensional image of the guitar designated by the subinformation (i.e., the position that should be depressed upon the performance of the to-be-guided chord), positions the open string pointer 833 at the position corresponding to the edge section of the open string designated by the subinformation and positions the mute string pointer 834 at the position corresponding to the edge section of the mute string designated by the subinformation. Further, the three-dimensional image forming section 153 positions the other subinformation such as the fret number 832 and chord name 831 at the predetermined position. The above-mentioned process forms the three-dimensional image that is a basis of the fingering guidance image 81 (i.e., that becomes the fingering guidance image 81 by an expansion in the two-dimensional coordinate system).

On the other hand, the image processing section 154 performs, with respect to the three-dimensional image formed by the three-dimensional image forming section 153, a process for changing the viewpoint to each object or a process for making the fingering image 812 the transmitting image. Specifically, the image processing section 154 firstly specifies the viewpoint to each object included in the three-dimensional image based upon the viewpoint flag Fv set according to the operation by the user or the operation given to the mouse of the input device 20. For example, in case where the viewpoint flag Fv indicates the front viewpoint mode, it specifies a predetermined viewpoint so as to direct toward the front of the neck section 811a of the guitar, while in case where the viewpoint flag Fv indicates the performer viewpoint mode, it specifies a predetermined viewpoint as a viewpoint directing toward the neck section 811a of the guitar from the performer. Further, the image processing section 154 selects the enlargement ratio such that the section of four or five frets centering about the section of the neck section 811a of the guitar where the depressed pointer 813 is arranged becomes the subject to be displayed. The reason why the four or five frets are taken as the subject to be displayed is that the guitar chord has the depressed position within the range of five frets at a maximum.

Further, the image processing section 154 executes a rendering for generating a two-dimensional image from the three-dimensional image whose viewpoint and enlargement ratio are specified through the above-mentioned procedure. In case where the transmitting display flag Ft indicates the transmitting display mode upon this rendering, the image processing section 154 executes a translucent process for turning the fingering image 812 into a transmitting image. For example, alpha blend is applied to the method for this translucent process. Specifically, the image processing section 154 replaces the display color of the two-dimensional image (i.e., the fingering image 812) generated from the three-dimensional image of the fingers into an intermediate color between the display color and a display color of the background (e.g., musical instrument image 811 or depressed pointer 813). More specifically, the display color Cnew of each pixel composing the fingering image 812 of the fingering guidance image 81 is expressed by the following equation by using alpha value $\alpha$ representing the transparency of the fingering image 812.

$$Cnew = Csource \cdot a + Cbackground \cdot (1 - \alpha)$$

In this equation, Csource is the display color of each pixel of the fingering image 812 that is in the stage before the translucent process is performed, while Cbackground is the display color of each pixel of the background image overlapped behind the fingers. Further, the value from "0" to "1" (e.g., "0.5") is selected beforehand as the alpha value $\alpha$. The fingering guidance image 81 generated by the above-mentioned process is recognized by the user as if the musical instrument image 811 and the depressed pointer 813 are displayed as transmitted through the translucent fingering image 812. On the other hand, in case where the transmitting display flag Ft indicates the non-transmitting display mode, the image processing section 154 does not execute the translucent process.

The display control section 16 shown in Fig. 11 causes the fingering guidance image 81 generated by the image forming portion 15 to be displayed on the display device 40. The control device 10 operates as the aforesaid each section, whereby the fingering guidance image 81 shown in Figs. 2 to 4 is displayed on the display device 40.

<A-2: Operation of the embodiment>

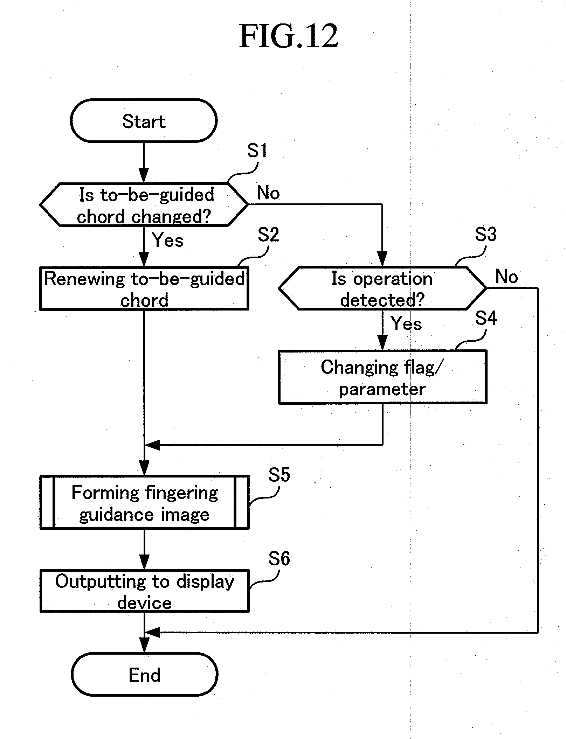

The user suitably operates the input device 20 to select any one of the plural pieces of music piece data 53 stored in the memory device 50 and instruct the start of its reproduction. When this operation is executed, the control device 10 executes at the same time the process for sequentially outputting to the tone generator 30 the event data included in the performance data 531 in the music piece data 53 selected by the user at the timing designated by the time stamp data and the process for displaying the fingering guidance image 81 onto the display device 40. Fig. 12 is a flowchart showing a flow of the process for displaying the fingering guidance image 81. This process is executed with a timer interruption generated every predetermined time.

When the timer interruption occurs, the control device 10 firstly determines whether the timing for changing the to-be-guided chord is arrived or not based upon the time stamp data Dt included in the chord sequence data 532 in the music piece data 53 selected by the user as the subject to be performed (step S1). If the result of the determination is YES, the control device 10 designates the chord indicated by the chord data Dc corresponding to the time stamp data Dt as the to-be-guided chord (step S2). The processes at the step S1 and step S2 are repeatedly performed every timer interruption, whereby the to-be-guided chord is sequentially renewed in synchronism with the reproduction of the music piece. It should be noted that, in case where the attachment of the capotasto or transposition is instructed by the user, the control device 10 designates the chord according to the instruction after the transposition as the to-be-guided chord at the step S2, as explained in Fig. 11 as the chord designating portion 11.

On the other hand, in case where it is determined that the timing for changing the to-be-guided chord has not yet been arrived, the control device 10 determines whether the input device 20 is operated or not by the user (step S3). If the result of this determination is YES, the control device 10 changes the flag and parameter relating to the display manner of the fingering guidance image 81 according to the content of the operation (step S4). For example, when the transmitting/non-transmitting button 872, viewpoint changing button 873 and position changing button 871 on the fingering display window W are operated by the user, the control device 10 renews respectively the transmitting display flag Ft, viewpoint flag Fv and position flag Fp. Further, in case where the mouse pointer is dragged by the mouse of the input device 20, the control device 10 changes the parameter showing the viewpoint and enlargement ratio according to the content of the operation. On the other hand, in case where it is determined at step S3 that no operation is detected at all, the control device 10 ends the timer interruption process without going through the step S5 and step S6.

When the to-be-guided chord is renewed at the step S2 or the flag or parameter is changed at the step S4, the control device 10 executes the process for forming the fingering guidance image 81 (step S5). The specific process executed at the step S5 is as stated above as the operation of the image forming portion 15 shown in Fig. 11. The fingering guidance image 81 formed here displays the to-be-guided chord designated at the step S2 in the manner designated at the step S4. Subsequently, the control device 10 outputs the fingering guidance image 81 formed at the step S5 to the display device 40 (step S6) as explained as the operation of the display control section 16 in Fig. 11. The above-mentioned operation is repeatedly performed every timer interruption, whereby the fingering guidance image 81 shown in Fig. 2 or Fig. 3 is displayed on the display device 40. The user can successfully confirm the fingering of each chord composing the music piece by visually confirming the fingering guidance image 81.

As explained above, the fingering image 812 is made to be the transmitting image in this embodiment when the transmitting display mode is selected, so that the user can correctly confirm the music instrument image 811 and depressed string pointer 813 arranged behind the fingering image 812. On the other hand, the fingering image 812 is made to be the non-transmitting image in the non-transmitting display mode, so that the user who intends to confirm only the form of the fingers upon performing each chord (i.e., the user who does not require to correctly confirm the positional relationship between the music instrument and fingers and depressed position) can clearly confirm the form of the fingers by selecting the non-transmitting display mode. Moreover, the viewpoint and enlargement ratio in the fingering guidance image 81 can be changed according to need by the user, thereby providing the fingering guidance image 81 according to the need of the user by performing the operation such as displaying the section that is intended to be more carefully confirmed in particular as enlarged. Particularly, the viewpoint of seeing the fingerboard 811b from the front and the viewpoint of seeing the fingerboard 811b from the performer can be changed over only by an extremely simple operation of manipulating the viewpoint button in this embodiment, thus convenient for the user.

Moreover, various subinformation relating to a chord (e.g., open string pointer 833, mute string pointer 834, fret number 832 or the like) is displayed with the image showing the fingering in this embodiment. Accordingly, the user can more properly confirm the fingering upon performing the chord. For example, although the position of the open string and mute string cannot clearly be confirmed by the display of only the musical instrument image 811, fingering image 812 and depressed pointer 813, the position of the open string and mute string can clearly be confirmed according to this embodiment. Additionally, the chord on which the instruction by the user about the transposition or attachment of the capotasto is reflected is designated as the to-be-guided chord, and further the position of the chord can suitably be changed, thereby providing the fingering guidance image 81 that can deal with the various performance of the user.

As for the configuration for displaying the fingering image 812 corresponding to each chord, such configuration can be adopted that images of the fingering in the form of performing each chord are prepared in advance every chord and any one of them is selected and displayed on the display device 40. However, it is inevitable in this configuration that the data amount of the image showing the fingers is increased. On the other hand, in this embodiment, the three-dimensional image indicating the basic framework of the fingers is specified from the finger structure data 551 b and model data 552 and the fingering image 812 is generated by transforming this three-dimensional image based upon the animation data 556 prepared for every chord. Therefore, the data amount can be decreased compared to the configuration wherein an image of fingers is prepared every chord. Further, the present embodiment also has an advantage of being capable of adding a new chord by a simple process of renewing the animation data 556.

<B: Second Embodiment>

Subsequently explained is a fingering guidance apparatus according to the second embodiment of the present invention. The above-mentioned first embodiment illustrates the configuration wherein only the fingering of one chord that should be performed with the reproduction of the music piece (hereinafter sometimes referred to as "current chord") is displayed as the fingering guidance image 81. On the other hand, the fingering guidance image showing the fingering of a chord that should be performed next to the current chord in the currently-reproduced music piece (hereinafter sometimes referred to as "next chord") is displayed with the fingering guidance image of the current chord in this embodiment.

Fig. 13 is a view showing the content of the fingering display window W in this embodiment. The fingering display window W shown in this figure includes a fingering guidance image 81b indicating the fingering of the next chord in addition to a fingering guidance image 81a indicating the fingering of the current chord. The objects composing this fingering guidance image 81b are the same as those of the fingering guidance image 81a showing the current chord, except that characters "NEXT" indicating the next chord are included. Further, the fingering guidance image 81 b of the next chord is displayed with the manner common to the fingering guidance image 81a of the current chord. For example, in case where the transmitting display mode is selected, the fingering image 812 in the fingering guidance image 81b of the next chord is made to be the transmitting image, and in case where the front viewpoint mode is selected, the fingering guidance image 81b of the next chord is made to be an image seen from the front.

The fingering display window W described above is realized by the configuration same as the first embodiment. It should be noted that the chord designating portion 11 shown in Fig. 11 also designates the next chord as the to-be-guided chord at the timing of designating the current chord as the to-be-guided chord, and the image forming portion 15 also forms the fingering guidance image 81b of the next chord with the fingering guidance image 81a of the current chord. Although the assumed case here is that the fingering guidance image 81a of the current chord and the fingering guidance image 81b of the next chord are displayed with the common manner, the configuration can be applied wherein each display manner is independently designated. For example, the fingering guidance image 81a of the current chord is displayed in the transmitting display mode, while the fingering guidance image 81b of the next chord is displayed in the non-transmitting mode, or the fingering guidance image 81a of the current chord is displayed in the front viewpoint mode, while the fingering guidance image 81b of the next chord is displayed in the performer viewpoint mode. Further, the configuration may be adopted wherein the viewpoint or enlargement ratio of each fingering guidance image 81 can independently be designated, or the configuration may be adopted wherein the viewpoint or enlargement ratio designated for one fingering guidance image 81 is applied to the other fingering guidance image 81.

As described above, the fingering guidance image 81a of the current chord and the fingering guidance image 81b of the next chord are simultaneously displayed in this embodiment, thereby obtaining an effect that the user can confirm not only the fingering of the current chord but also the fingering of the next chord for the performance, in addition to the effect same as the first embodiment.

<C: Third Embodiment>

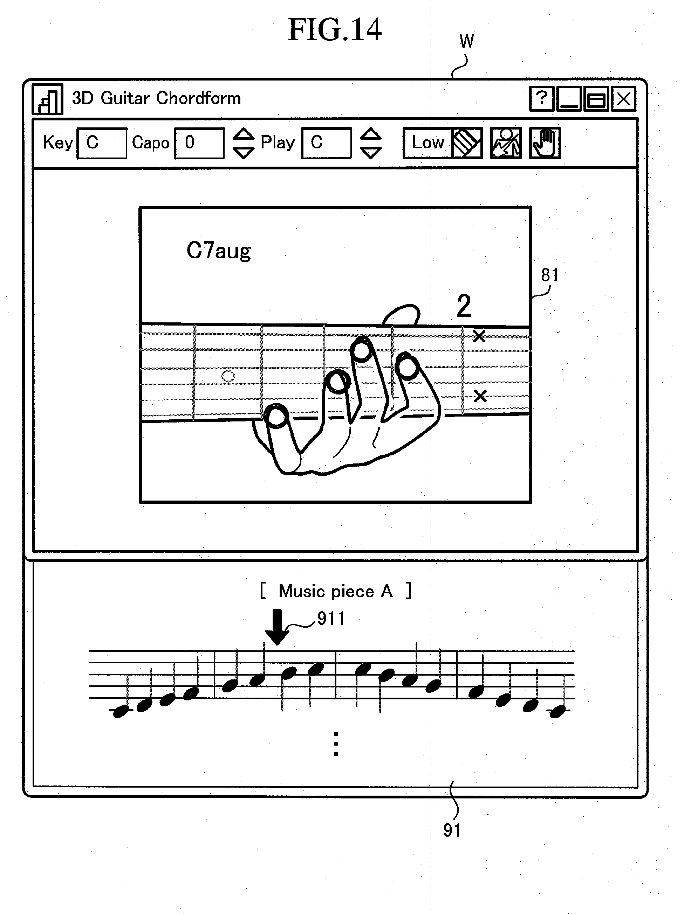

Subsequently explained is a fingering guidance apparatus according to the third embodiment of the present invention. This fingering guidance apparatus displays the score of the music piece on the display device in addition to the fingering display window W shown in the above-mentioned each embodiment. Fig. 14 is a view showing the image displayed on the display device 40 in this embodiment. As shown in this figure, displayed on the display device 40 are the fingering display window W (the one showing in the first embodiment here) and also the image showing the score of the music piece selected to be reproduced by the user (hereinafter referred to as "score image 91"). The score image 91 includes a pointer 911 indicating the currently performed point. The position of the pointer 911 is successively moved as the reproduction of the music piece proceeds. This function is realized by the fingering guidance program 511 executed by the control device 10. The to-be-guided chord of the fingering guidance image 81 is sequentially renewed in synchronism with the reproduction of the music piece, like the above-mentioned embodiment. Accordingly, the to-be-guided chord guided by the fingering guidance image 81 is the chord in the music piece at the position indicated by the pointer 911. Further, the user can optionally change the position of the pointer 911 by suitably operating the input device 20 when the reproduction of the music piece is stopped. The control device 10 specifies the chord at the position indicated by the pointer 911 after the change based upon the chord sequence data 532 of the music piece data 53 and designates this chord as the to-be-guided chord to thereby generate the fingering guidance image 81. Accordingly, the user can confirm the fingering of the chord in the music piece at the optional position by suitably moving the pointer 911.

This embodiment can afford the same effect as the first embodiment. Additionally, the fingering of the chord in the music piece at the position optionally selected by the user is guided to the user according to this embodiment, whereby the user can efficiently practice the performance of the music piece (especially the chord change).

<D: Modified Example>

Various modifications can be made to the aforesaid each embodiment. The specific modified manners are as follows.

(1) Although the aforesaid each embodiment illustrates the configuration wherein alpha value is fixed in advance in the translucent process, the alpha value may optionally be changed according to the operation by the user. Further, the method for turning the fingering image 812 into the transmitting image is not limited to alpha blend. For example, such configuration may be adopted that each pixel composing the two-dimensional image of the fingers is missed every predetermined interval (i.e., the display color is made transparent) and this two-dimensional image is overlapped with the background for causing the user to visually confirm the fingering image 812 through the background. For example, among the pixels composing the two-dimensional image of the fingers, pixels alternately selected in the x-direction and y-direction are thinned to form a mesh-like image (i.e., to form a checkered two-dimensional image) and this image is displayed as overlapped with the background. Further, only the outline of the fingers is displayed with a non-transparent or translucent image, within which the background image such as the guitar and depressed pointer 813 is visibly displayed. As described above, a visible image wherein the image arranged at its background is displayed so as to be recognized by the user is enough for the "transmitting image" in this embodiment. Its specific manner or a method for forming the transmitting image does not matter.

(2) Although the aforesaid each embodiment illustrates the configuration wherein the to-be-guided chord is designated in synchronism with the reproduction of the music piece, a method for designating the to-be-guided chord is not limited to this. For example, the configuration can be adopted wherein the user can select an optional chord (chord root, chord type or position) by operating the input device 20, whereby the selected chord may be designated as the to-be-guided chord. Specifically, the present invention does not necessarily require the configuration wherein the chord displayed on the fingering guidance image 81 is associated with the music piece.

(3) It is natural that the manner of the fingering guidance image 81 is not limited to those shown in the aforesaid each embodiment. For example, the configuration can be adopted wherein the user can optionally select the display color of each section composing the fingering guidance image 81, or the configuration can be adopted wherein the fingering guidance image 81b of the next chord is displayed with a tone darker than the fingering guidance image 81a of the current chord in the second embodiment.

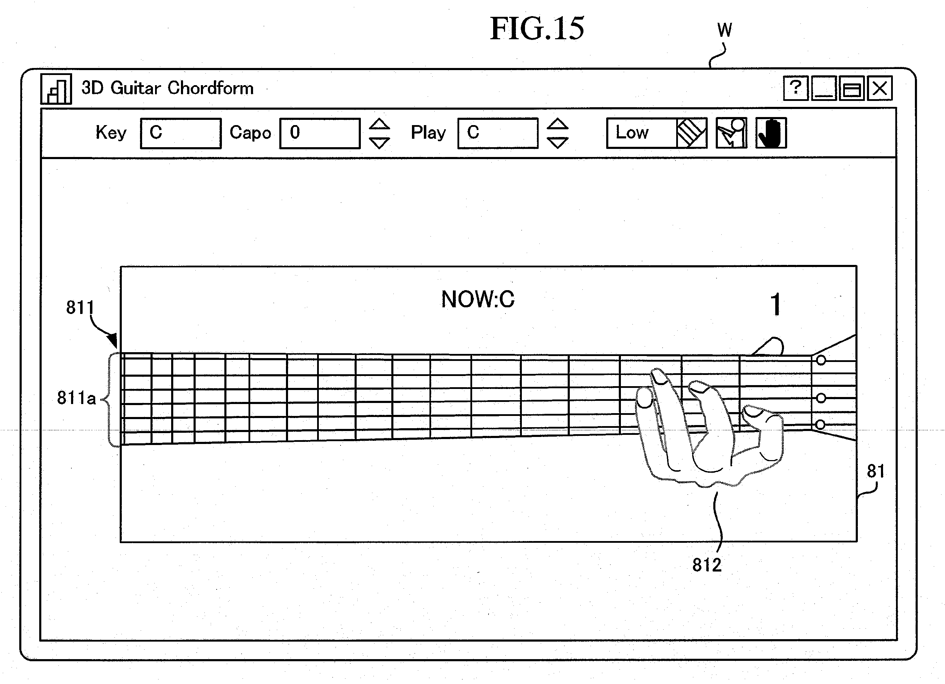

Moreover, although the aforesaid each embodiment illustrates the fingering guidance image 81 wherein four or five frets including the section of the guitar that should be depressed are defined as subjects to be displayed, the musical instrument image 811 showing the whole neck section 811a may be included in the fingering guidance image 81 as shown in Fig. 15. Further, the user can optionally select by the input device 20 a mode for partially displaying the neck section 811a as shown in the aforesaid each embodiment and a mode for entirely displaying the neck section 811a as shown in Fig. 15. This configuration is realized as follows. Specifically, a flag showing a difference between the mode for partially displaying the neck section 811a and the mode for entirely displaying the neck section 811a is set to the RAM at the step S4 in Fig. 12, whereby the image processing section 154 forms the fingering guidance image 81 with the enlargement ratio according to the content of this flag (step S5). It should be noted that, although Fig. 15 illustrates the case wherein the neck section 811a is seen from the front, the fingering guidance image 81 having the viewpoint of seeing from the performer or the viewpoint designated by the user can be displayed like the aforesaid each embodiment.

(4) The configuration can also be adopted wherein the manner of various marks such as the depressed pointer 813, open string pointer 833 and mute string pointer 834 is designated by the structure data 551 and model data 552. For example, data that indicates the structure and surface manner of the string to which the open string pointer 833 is added and data that indicates the structure and surface manner of the string to which the mute string pointer 834 is added are respectively used as the data indicating the string in the guitar structure data 551a and the model data 552.

Further, the configuration may be adopted wherein the structure of the depressed pointer 813 is defined by the structure data 551 and its surface manner is defined by the model data 552, whereby a solid three-dimensional image of the depressed pointer 813 is formed based upon this structure data 551 and the model data 552.

(5) The subinformation displayed with respect to each chord is not limited to those shown in the aforesaid each embodiment. For example, the present invention can adopt the configuration wherein the number of each fret is arranged in the vicinity of the edge section of each string as the subinformation or the configuration wherein the subinformation shown in the aforesaid each embodiment is partially omitted. Further, the configuration may be adopted wherein whether each subinformation is displayed or not is changed according to the operation to the input device 20 by the user. This configuration may take the configuration wherein whether the subinformation is displayed or not is independently selected every piece of subinformation or the configuration wherein whether the subinformation is displayed or not is selected en bloc with respect to all pieces or some pieces of the subinformation.

(6) Although the aforesaid second embodiment illustrates the configuration wherein the fingering guidance image 81a of the current chord and the fingering guidance image 81b of the next chord are displayed, the fingering guidance images 81 of chords after that may further be displayed. Moreover, the present invention can adopt the configuration wherein whether the fingering guidance image 81b of the next chord is displayed or not is changed according to the operation to the input device 20 by the user. Specifically, in case where a mode for displaying only the fingering guidance image 81 of the current chord is selected, the fingering display window W shown in Figs. 2 to 4 is displayed, while in case where a mode for displaying the fingering guidance image 81 of the next chord too is selected, the fingering display window W shown in Fig. 13 is displayed.

(7) Although the aforesaid each embodiment illustrates the configuration for guiding a chord of a guitar, the other stringed instrument such as a ukulele may be the subject whose fingering is to be guided. Further, the musical instrument whose fingering is to be guided is not limited to stringed instruments. For example, the present invention can be applied as a apparatus for guiding to the user a fingering of various instruments such as keyboard instruments, e.g. piano, or wind instruments, e.g., trumpet. Specifically, in this configuration, the control device 10 functions as the image forming portion 15 for forming the fingering guidance image including the musical instrument image showing the musical instrument and the transmitting image indicating the fingers in the form of performing the musical instrument as well as the display control section 16 that causes the formed fingering guidance image to be displayed onto the display device, by the execution of a program. The configuration for designating the chord that should be guided to the user may take the configuration wherein the chord is designated like the aforesaid each embodiment or the configuration wherein performance operation element (e.

g., a key of the keyboard instrument) that should be operated by the user is individually designated based upon the music piece data. Further, applicable configuration is forming a fingering guidance image wherein the pointer (corresponding to the depressed pointer 813 in the aforesaid each embodiment) is overlapped with the performance operation element of plural performance operation elements that should be operated by the user.

## Claims

1. A fingering guidance apparatus comprising:

   image forming means for forming a fingering guidance image including a musical instrument image indicating a musical instrument and a transmitting image indicating fingers in the form of performing the musical instrument; and display control means for causing the fingering guidance image formed by the image forming means to be displayed on a display device.

2. A fingering guidance apparatus claimed in Claim 1, wherein
   the image forming means forms a fingering guidance image further including a pointer arranged at the performance operation element, that should be operated, in the musical instrument image.

3. A fingering guidance apparatus comprising:

   chord designating means for designating any one of plural chords of a musical instrument; image forming means for forming a fingering guidance image including a musical instrument image indicating a musical instrument and a transmitting image indicating fingers in the form of performing the chord designated by the chord designating means; and display control means for causing the fingering guidance image formed by the image forming means to be displayed on a display device.

4. A fingering guidance apparatus claimed in Claim 3, wherein
   the musical instrument is a stringed instrument.

5. A fingering guidance apparatus claimed in Claim 4, further comprising:

   capo position designating means for designating the position of the stringed instrument where a capotasto should be attached, wherein the chord designating means has transposition control means that designates a chord obtained by transposing the chord designated by the chord designating means according to the position of the capotasto designated by the capo position designating means.

6. A fingering guidance apparatus claimed in Claim 4 or 5, wherein
   the image forming means forms the fingering guidance image including subinformation relating to the chord designated by the chord designating means.

7. A fingering guidance apparatus claimed in Claim 6, wherein
   the subinformation includes at least one of a chord name, an open string pointer indicating an open string upon performing a chord, a mute string pointer indicating a mute string upon performing a chord and a fret number depressed upon performing a chord.

8. A fingering guidance apparatus claimed in any one of Claims 3 to 7, further comprising:
   obtaining means for obtaining chord sequence data indicating a sequence order of a chord in a music piece, wherein
   the chord designating means sequentially designates a chord in the order indicated by the chord sequence data obtained by the obtaining means.

9. A fingering guidance apparatus claimed in Claim 8, wherein
   the chord designating means designates one chord in the music piece and the other chord next to the one chord in the sequence indicated by the chord sequence data,
   the image forming means forms a fingering guidance image corresponding to the one chord and a fingering guidance image corresponding to the other chord, and
   the display control means causes each fingering guidance image formed by the image forming means to be displayed on the display device.

10. A fingering guidance apparatus claimed in Claim 8 or 9, further comprising:
    tone generating means for outputting a tone signal based upon the music piece data, wherein
    the chord designating means has timing control means that sequentially designates a chord in synchronism with the output of the tone signal by the tone generating means.

11. A fingering guidance apparatus claimed in any one of Claims 3 to 10, wherein
    the image forming means forms a fingering guidance image further including a depressed pointer arranged at the position to be depressed upon performing the chord designated by the chord designating means.

12. A fingering guidance apparatus claimed in any one of Claims 3 to 11, wherein
    the image forming means has means for changing the transmitting image indicating the fingers into a non-transmitting image.

13. A fingering guidance apparatus claimed in any one of Claims 3 to12, further comprising:
    viewpoint designating means for designating a viewpoint in the fingering guidance image, wherein
    the image forming means forms the fingering guidance image that the musical instrument and fingers are seen from the viewpoint designated by the viewpoint designating means.

14. A fingering guidance apparatus claimed in any one of Claims 3 to 13, further comprising:
    position designating means for designating either one of high-position and low-position as a position upon performing a chord, wherein
    the image forming means forms the transmitting image indicating the fingers in the form of performing the chord designated by the chord designating means at the position designated by the position designating means.

15. A program that causes a computer to function as:
    image forming means for forming a fingering guidance image including a musical instrument image indicating a musical instrument and a transmitting image indicating fingers in the form of performing the musical instrument; and
    display control means for causing the fingering guidance image formed by the image forming means to be displayed on a display device.

16. A program that causes a computer to function as:
    chord designating means for designating any one of plural chords of a musical instrument;
    image forming means for forming a fingering guidance image including a musical instrument image indicating a musical instrument and a transmitting image indicating fingers in the form of performing the chord designated by the chord designating means; and
    display control means for causing the fingering guidance image formed by the image forming means to be displayed on a display device.

17. A program claimed in Claim 16, wherein the musical instrument is a stringed instrument.

18. A program claimed in Claim 16 or 17, wherein the image forming means forms a fingering guidance image further including a depressed pointer arranged at the position to be depressed upon performing the chord designated by the chord designating means.

# FIG.1

Speakers — 31

10 — Control device
20 — Input device
30 — Tone generator
40 — Display device

B

50 — Memory device

511 — Fingering guidance program
512 — Music piece reproduction program
553 — Structure referring table
557 — Animation referring table

551a — 551 — Guitar structure data
551b — Fingering structure data

53 — Music piece data
531 — Performance data
532 — Chord sequence data

552 — Model data
556 — Animation data

100: Fingering guidance apparatus

EP 1 569 185 A2

## FIG.2

[Non-transmitting display mode + Front viewpoint mode]

W

**3D Guitar Chordform**

Key [C] Capo [0] △▽ Play [C] △▽ [Low]

851　852　852a　853　853a　871　873　872

NOW:C7aug ～831

811: Musical instrument image

813:Depressed pointer

832

811c

834

811a

2

811b

811c

81:Fingering guidance image

812:Fingering image

EP 1 569 185 A2

# FIG.3

[Transmitting display mode + Front viewpoint mode]

3D Guitar Chordform

Key [C]  Capo [0]  Play [C]  Low

NOW:C7aug

811

813

2

812:Fingering image (transmitting)

81

872

W

FIG.4 — W

[Transmitting display mode + Performer viewpoint mode]

**3D Guitar Chordform**

Key [C]  Capo [0] ⬍  Play [C] ⬍  [Low] 

873  872

NOW:C7aug

811

813

813

2

812

81

# FIG.5

532:Chord sequence data

| Dt (CNT1) | Dc (CD1) | Dt (CNT2) | Dc (CD2) | ... |
|---|---|---|---|---|

# FIG.6

551a:Guitar structure data

| Fret number | Coordinates |
|---|---|
| Fret 1 | ( X1,Y1,Z1) |
| Fret 2 | ( X2,Y2,Z2) |
| ⋮ | ⋮ |

# FIG.7

551b:Fingering structure data

| Joint number | Coordinates |
|---|---|
| Joint 1 | ( X1,Y1,Z1) |
| Joint 2 | ( X2,Y2,Z2) |
| ⋮ | ⋮ |

# FIG.8

553:Structure referring table

| Structure data | Model data |
|---|---|
| guitar.skl | guitar.bmdl |
| wrist.skl | wrist.bmdl |
| ⋮ | ⋮ |

# FIG.9

556:Animation data

| Chord: C7aug (high-position) | | |
|---|---|---|
| Joint number | Position | Angle |
| Joint 1 | ( X1',Y1',Z1') | $\theta 1$ |
| Joint 2 | ( X2',Y2',Z2') | $\theta 2$ |
| ⋮ | ⋮ | ⋮ |

(Chord: D (low-position), Chord: D (high-position), Chord: C7aug (low-position))

# FIG.10

557:Animation referring table

| Chord | Referred data | Subinformation |
|---|---|---|
| C7aug (high-position) | anmC7aug(hi) .banm | Chord name |
| | | Fret number (guided fret) |
| | | Open string (string number) |
| | | Mute string (string number) |
| | | Depressed position (string number + fret number) |
| C7aug (low-position) | anmC7aug(low) .banm | Chord name |
| | | Fret number |
| | | Open string |
| | | Mute string |
| | | Depressed position |
| D (low-position) | anmD(hi) .banm | Chord name |
| | | Fret number |
| | | Open string |
| | | Mute string |
| | | Depressed position |
| ⋮ | ⋮ | ⋮ |

# FIG.11

50

| Music piece data | 53

11:Chord designating portion

Chord data obtaining section — 111

MIDI clock → Timing control section — 112

Transposition instruction (capo position) → Transposition control section — 113

50

Animation referring table — 557

Animation data — 556

15:Image forming portion

151

Fp → Animation data reading section ← Animation data

153

Three-dimensional image forming section ← Structure data reading section — 152

Ft →
Fv →
Turning angle/ enlargement ratio → Image processing section — 154

Structure referring table — 553

Model data — 552

Guitar structure data — 551a

Fingering structure data — 551b

Display control section — 16

↓

Display device40

50

# FIG.12

```
                    ┌─────────────┐
                    │    Start    │
                    └──────┬──────┘
                           │                    S1
                           ▼
              ┌─────────────────────┐  No
             <  Is to-be-guided      >─────────────┐
              \  chord changed?     /              │
               └─────────┬─────────┘               │
                    Yes  │              S2         │          S3
                         ▼                          ▼
              ┌─────────────────────┐    ┌─────────────────────┐  No
              │ Renewing to-be-guided│   <  Is operation        >────┐
              │        chord         │    \     detected?      /     │
              └─────────┬───────────┘      └────────┬────────┘       │
                        │                      Yes  │       S4       │
                        │                           ▼                │
                        │               ┌─────────────────────┐      │
                        │               │   Changing flag/     │     │
                        │               │     parameter        │     │
                        │               └──────────┬──────────┘      │
                        │                          │                 │
                        ▼◄─────────────────────────┘                 │
            ┌─╥─────────────────────╥─┐   S5                         │
            │ ║  Forming fingering   ║ │                             │
            │ ║  guidance image      ║ │                             │
            └─╨──────────┬──────────╨─┘                              │
                         │              S6                           │
                         ▼                                           │
            ┌─────────────────────────┐                             │
            │  Outputting to display   │                            │
            │        device           │                             │
            └────────────┬────────────┘                             │
                         ▼◄────────────────────────────────────────┘
                    ┌─────────────┐
                    │     End     │
                    └─────────────┘
```

## FIG.13

81a:Fingering guidance image (current chord)

81b:Fingering guidance image (next chord)

EP 1 569 185 A2

EP 1 569 185 A2

# FIG.14

25

EP 1 569 185 A2

# FIG.15

W

**3D Guitar Chordform**    ? □ ⊟ ✕

Key [C]  Capo [0] ⇕  Play [C] ⇕    [Low] ▧ ▧ ✋

811

811a

NOW:C

1

81

812